# EUROPÄISCHE PATENTSCHRIFT

(11) **EP 2 656 336 B1**
(45) Veröffentlichungstag und Bekanntmachung des Hinweises auf die Patenterteilung: **10.01.2018**
(21) Anmeldenummer: 11805446.9
(22) Anmeldetag: 12.12.2011
(51) Int. Cl.: G08G 1/16, G06K 9/00, G06T 7/73, G08G 1/14

(54) **VERFAHREN ZUM BETREIBEN EINES FAHRERASSISTENZSYSTEMS IN EINEM KRAFTFAHRZEUG, FAHRERASSISTENZSYSTEM UND KRAFTFAHRZEUG**
METHOD FOR OPERATING A DRIVER ASSISTANCE SYSTEM IN A MOTOR VEHICLE, DRIVER ASSISTANCE SYSTEM AND MOTOR VEHICLE
PROCÉDÉ POUR FAIRE FONCTIONNER UN SYSTÈME D'ASSISTANCE DE CONDUCTEUR SUR UN VÉHICULE AUTOMOBILE, SYSTÈME D'ASSISTANCE DE CONDUCTEUR ET VÉHICULE AUTOMOBILE

(30) Priorität: 24.12.2010 DE 102010056217
(43) Veröffentlichungstag der Anmeldung: 30.10.2013
(73) Patentinhaber: Valeo Schalter und Sensoren GmbH, 74321 Bietigheim-Bissingen (DE)
(72) Erfinder: HEIMBERGER, Marco, 74321 Bietigheim-Bissingen (DE); GEIGER, Tobias, 74321 Bietigheim-Bissingen (DE)
(86) Internationale Anmeldenummer: PCT/EP2011/072413
(87) Internationale Veröffentlichungsnummer: WO 2012/084564

(56) Entgegenhaltungen:
- EP-A1- 2 011 699
- EP-A1- 2 184 208
- DE-A1-102006 057 552
- DE-A1-102008 041 761
- DE-A1-102009 029 553
- US-A1- 2002 134 151
- YOUSSEF ET AL: "A smart access control using an efficient license plate location and recognition approach", EXPERT SYSTEMS WITH APPLICATIONS, OXFORD, GB, Bd. 34, Nr. 1, 19. Mai 2007 (2007-05-19), Seiten 256-265, XP022085054, ISSN: 0957-4174, DOI: 10.1016/J.ESWA.2006.09.013

## Beschreibung

Die Erfindung betrifft ein Verfahren zum Betreiben eines Fahrerassistenzsystems in einem Kraftfahrzeug durch Aufnehmen eines Bildes eines benachbarten Fahrzeugs mit einer Kamera des Fahrerassistenzsystems sowie Verarbeiten des Bildes und hierbei Identifizieren zumindest eines Objekts an dem benachbarten Fahrzeug im Bild mittels einer Recheneinrichtung des Fahrerassistenzsystems. Die Erfindung betrifft außerdem ein Fahrerassistenzsystem, welches zum Durchführen eines derartigen Verfahrens ausgebildet ist, wie auch ein Kraftfahrzeug mit einem solchen Fahrerassistenzsystem. Das Dokument DE102008041761 beschreibt ein Fahrerassistenzsystem. Also gilt das Interesse vorliegend einem Fahrerassistenzsystem, welches eine Kamera zur Aufnahme von Bildern einer Umgebung des Kraftfahrzeugs beinhaltet, wie auch eine Recheneinrichtung zum Verarbeiten der Bilder. Anhand der aufgenommenen Bilder kann das Fahrerassistenzsystem dann auf verschiedenste Merkmale der Fahrzeugumgebung zurückschließen. Beispielsweise wird anhand der Bilder ein Abstand zwischen dem eigenen Kraftfahrzeug und einem benachbarten Fahrzeug - etwa einem vorausfahrenden Fahrzeug - bestimmt. Ein derartiges Verfahren ist beispielsweise aus dem Dokument DE 10 2007 012 955 A1 bekannt. Dabei wird zunächst in einem aufgenommenen Bild ein zu dem benachbarten Fahrzeug benachbarter ortsfester Gegenstand zu einem ersten Zeitpunkt identifiziert. Anschließend wird die Zeit gemessen, bis das eigene Kraftfahrzeug den Gegenstand passiert. Die Entfernung zu dem benachbarten Fahrzeug wird anhand der gemessenen Zeit berechnet. Sodann wird die berechnete Entfernung mit der Größe der Abbildung des Gegenstands verknüpft, und es wird ein Bild des benachbarten Fahrzeugs aufgenommen. In dem Bild wird ein Merkmal des benachbarten Fahrzeugs identifiziert, und es wird die Größe der Abbildung des Merkmals in dem Bild ermittelt. Schließlich wird die Entfernung zu dem benachbarten Fahrzeug anhand der Größe der Abbildung abgeschätzt.

Es ist Aufgabe der Erfindung, eine Lösung aufzuzeigen, wie die Funktionalität bzw. der Einsatzbereich eines Fahrerassistenzsystems mit einer Kamera im Vergleich zum Stand der Technik erweitert werden kann.

Diese Aufgabe wird erfindungsgemäß durch ein Verfahren mit den Merkmalen gemäß Patentanspruch 1, durch ein Fahrerassistenzsystem mit den Merkmalen des Patentanspruchs 12, wie auch durch ein Kraftfahrzeug mit den Merkmalen gemäß Patentanspruch 13 gelöst. Vorteilhafte Ausführungen der Erfindung sind Gegenstand der abhängigen Patentansprüche und der Beschreibung.

Ein erfindungsgemäßes Verfahren ist zum Betreiben eines Fahrerassistenzsystems in einem Kraftfahrzeug ausgelegt. Es wird ein Bild eines zum Kraftfahrzeug benachbarten Fahrzeugs durch eine Kamera des Fahrerassistenzsystems aufgenommen. Das Bild wird dann mittels einer Recheneinrichtung verarbeitet, wobei zumindest ein Objekt an dem benachbarten Fahrzeug im Bild identifiziert wird. Erfindungsgemäß ist vorgesehen, dass anhand des Abbilds des identifizierten Objekts eine Orientierung des benachbarten Fahrzeugs bezüglich des eigenen Kraftfahrzeugs bestimmt wird.

Die Funktionalität bzw. der Einsatzbereich des Fahrerassistenzsystems wird somit im Vergleich zum Stand der Technik dadurch erweitert, dass eine Orientierung - d.h. die Ausrichtung - des benachbarten Fahrzeugs relativ zum eigenen Kraftfahrzeug ermittelt wird, nämlich anhand des aufgenommenen Bildes. Eine solche Vorgehensweise erweist sich insbesondere bei einem Fahrerassistenzsystem als besonders vorteilhaft, welches zum Vermessen von Parklücken und zum Unterstützen des Fahrers beim Durchführen von Parkvorgängen dient. Wird nämlich die Orientierung eines benachbarten Fahrzeugs bestimmt, welches eine Parklücke begrenzt, so wird eine Information darüber gewonnen, ob die Parklücke eine Querparklücke oder eine Längsparklücke ist und somit, wie das eigene Kraftfahrzeug in die Parklücke eingeparkt werden soll. Die Information über die Orientierung des benachbarten Fahrzeugs kann also für die Berechnung einer Einparkbahn herangezogen werden, entlang welcher das eigene Kraftfahrzeug in die Parklücke eingeparkt werden kann.

Als Objekt kann beispielsweise ein amtliches Kennzeichenschild des benachbarten Fahrzeugs im aufgenommenen Bild identifiziert werden, und die Orientierung kann anhand des Abbilds des Kennzeichens bestimmt werden. Diese Ausführungsform macht sich die Tatsache zunutze, dass nahezu jedes Fahrzeug ein amtliches Kennzeichen besitzt, sodass dieses zuverlässig zur Gewinnung der Ausrichtung herangezogen werden kann. Außerdem kann das amtliche Kennzeichen am benachbarten Fahrzeug ohne viel Aufwand identifiziert werden, nämlich beispielsweise anhand einer Mustererkennung. Ein Kennzeichen ist in der Regel unter einem rechten Winkel zur Fahrzeuglängsrichtung angebracht ist, so dass anhand der Ausrichtung des Kennzeichenschilds auch die Orientierung des benachbarten Fahrzeugs ermittelt werden kann.

Das Identifizieren des Kennzeichens kann derart aussehen, dass das aufgenommene Bild einer Mustererkennung hinsichtlich Ecken und/oder Kanten des Kennzeichens unterzogen wird. Es kann somit im aufgenommenen Bild nach einem Rechteck bzw. einem Trapez gesucht werden. Diese Methode der Erkennung eines Nummernschildes ist einerseits besonders zuverlässig und andererseits auch relativ leicht zu realisieren. Bei der Erkennung des Kennzeichens können zunächst seine Kanten erkannt werden, und anhand der Kanten können dann die Ecken des Kennzeichens identifiziert werden. Die Erkennung der Kanten kann mittels einer bekannten Kantenerkennungsmethode erfolgen, nach welcher im aufgenommenen Bild nach Farbübergängen - beispielsweise von schwarz zu weiß - gesucht wird. Wurden die Kanten erkannt, so ergeben sich auch die Ecken des Kennzeichens. Sind die Kanten lediglich teilweise bzw. abschnittsweise erkennbar, so wird bevorzugt eine Schnittpunktberechnung vorgenommen. Somit können die Ecken auch bei teilweise unsichtbaren Kanten identifiziert werden, und des Weiteren auch dann, wenn die Ecken selbst in dem Bild nicht erkannt werden können.

Werden vier Ecken erkannt, so kann die Identität des Kennzeichens dadurch plausibilisiert werden, dass die Länge des Abbilds des Kennzeichens mit seiner Breite ins Verhältnis gesetzt wird, und geprüft wird, ob dieses Verhältnis in einem vorgegebenen Wertebereich liegt. Somit kann das Kennzeichen von anderen Rechtecken unterschieden werden, denn sowohl die Länge als auch die Breite eines amtlichen Kennzeichens ist fest vorgegeben und stellt eine genormte Größe dar.

Das Bestimmen der Orientierung anhand des Abbilds des Kennzeichens kann wie folgt aussehen: Es werden Längskanten des Kennzeichens im Bild identifiziert. Es wird ein Winkel zwischen den Längskanten ermittelt, und die Orientierung wird abhängig von dem Winkel bestimmt. Eine solche Vorgehensweise ist besonders einfach zu implementieren; es brauchen lediglich die Längskanten des Kennzeichens im Bild identifiziert und ein Winkel zwischen den Längskanten ermittelt zu werden. Dieser Winkel stellt dann ein unmittelbares Maß für einen Orientierungswinkel des benachbarten Fahrzeugs bezüglich des eigenen Kraftfahrzeugs dar.

Ergänzend (z.B. zur Plausibilisierung) oder alternativ können als Objekte auch zwei Räder derselben Seite des benachbarten Fahrzeugs im aufgenommenen Bild identifiziert werden, und die Orientierung kann anhand des Abbilds der Räder bestimmt werden. Auch Räder eines Kraftfahrzeugs besitzen ein spezifisches Muster und können somit anhand einer Mustererkennung ohne viel Aufwand identifiziert werden.

Beispielsweise erfolgt das Identifizieren eines Rads derart, dass das aufgenommene Bild einer Mustererkennung hinsichtlich eines Reifens des Rads unterzogen wird. In dem aufgenommenen Bild wird also vorzugsweise nach schwarzen Kreisringen gesucht, die dann als Reifen interpretiert werden.

Nach Auffinden von zwei Reifen kann auch geprüft werden, ob beide Reifen zu demselben Fahrzeug gehören. Für diese Plausibilisierung kann ein Bereich des Bildes zwischen den erkannten Reifen auf seine Farbverteilung hin untersucht werden. Wird eine gleichmäßige Verteilung der Farbgebung erkannt, so wird angenommen, dass es sich bei den beiden Reifen um Reifen ein und desselben Fahrzeugs handelt. Ergänzend oder alternativ kann der Bereich zwischen den Reifen daraufhin überprüft werden, ob Linien in dem Bereich vorhanden sind, die eine zwischen den beiden Reifen definierte Verbindungslinie kreuzen. Werden keine oder nur wenige Linien erkannt, so kann ebenfalls angenommen werden, dass es sich um die Reifen ein und desselben Fahrzeugs handelt.

Also kann die Orientierung des benachbarten Fahrzeugs anhand des Abbilds der Räder bestimmt werden. Diese Bestimmung kann folgende Schritte beinhalten: Zunächst können die jeweiligen Mittelpunkte der Räder im Bild identifiziert werden, etwa die Mittelpunkte der jeweiligen Felgen. Dann kann eine Verbindungsgerade zwischen den Mittelpunkten definiert werden. Anschließend kann die Orientierung in Abhängigkeit von einer Ausrichtung der Verbindungsgeraden im Bild bestimmt werden. Dies ist eine besonders zuverlässige Methode zur Bestimmung der Orientierung des benachbarten Fahrzeugs. Sie kann auch relativ einfach implementiert werden; denn die Ausrichtung der Verbindungsgeraden im Bild stellt ein unmittelbares Maß für die Orientierung des benachbarten Fahrzeugs bezüglich des eigenen Kraftfahrzeugs dar.

Also kann die Orientierung einerseits anhand des Abbilds des amtlichen Kennzeichens und/oder andererseits anhand des Abbilds der Räder des benachbarten Fahrzeugs bestimmt werden. Werden beide Methoden miteinander kombiniert, so kann die Orientierung des benachbarten Fahrzeugs plausbilisiert werden. Beispielsweise wird ein Mittelwert aus der anhand des Abbilds des amtlichen Kennzeichens gewonnenen Orientierung sowie der anhand des Abbilds der Räder ermittelten Orientierung berechnet, und der Mittelwert kann als endgültiger Wert für die Orientierung des benachbarten Fahrzeugs gelten. Auf diesem Wege gelingt es, die Orientierung des benachbarten Fahrzeugs mit höchster Präzision zu bestimmen, nämlich beruhend auf zwei voneinander unabhängigen Methoden. Es kann jedoch auch vorgesehen sein, dass wahlweise die eine oder die andere Methode angewendet wird, nämlich insbesondere dann, wenn im aufgenommen Bild ausschließlich das Kennzeichen oder aber die Räder identifiziert werden können.

Wie bereits ausgeführt, kann die Information über die Orientierung des benachbarten Fahrzeugs beim Unterstützen des Fahrers beim Durchführen von Parkvorgängen des Kraftfahrzeugs genutzt werden. Das Fahrerassistenzsystem kann einen von der Kamera verschiedenen Abstandssensor - insbesondere einen Ultraschallsensor - beinhalten, mittels welchem fahrzeugexterne Hindernisse erfasst werden können. Bevorzugt werden mit dem Abstandssensor Begrenzungen einer Parklücke und somit auch Parklücken selbst erfasst. Bei einem solchen Fahrerassistenzsystem kann die Verarbeitung des aufgenommenen Bilds hinsichtlich der Identifikation des zumindest einen Objekts im Bild erst dann gestartet werden, wenn der Abstandssensor ein Hindernis - etwa ein eine Parklücke begrenzendes Fahrzeug - detektiert. Sodann kann die Orientierung dieses die Parklücke begrenzenden Fahrzeugs bestimmt werden, und diese Information kann dann zur Berechnung einer Einparkbahn genutzt werden. Anhand dieser Information kann nämlich zwischen Längsparklücken und Querparklücken unterschieden werden.

Folgende Vorgehensweise erweist sich als vorteilhaft: Der Abstandssensor misst eine Ausdehnung des benachbarten Fahrzeugs, nämlich insbesondere während einer Vorbeifahrt des Kraftfahrzeugs an dem benachbarten Fahrzeug. Gleichzeitig nimmt die Kamera kontinuierlich Bilder des benachbarten Fahrzeugs auf. Ist die gemessene Ausdehnung des benachbarten Fahrzeugs kleiner als ein vorgegebener Referenzwert, so wird ein aufgenommenes Bild einer Mustererkennung hinsichtlich des amtlichen Kennzeichens des benachbarten Fahrzeugs unterzogen. Eine relativ kleine Ausdehnung des benachbarten Fahrzeugs spricht nämlich dafür, dass dieses Fahrzeug quer in einer Parklücke geparkt bzw. im Wesentlichen senkrecht zum eigenen Kraftfahrzeug orientiert ist. Dies kann dann anhand des aufgenommenen Bildes verifiziert werden. Ist hingegen die Ausdehnung größer als der vorgegebene Referenzwert, so deutet dies darauf hin, dass das benachbarte Fahrzeug in einer Längsparklücke steht bzw. im Wesentlichen parallel zum eigenen Kraftfahrzeug ausgerichtet ist. In diesem Fall kann das aufgenommene Bild einer Mustererkennung hinsichtlich der Räder des benachbarten Fahrzeugs unterzogen werden, sodass die parallele Orientierung des benachbarten Fahrzeugs anhand des Abbilds der Räder verifiziert wird. Somit kann die Präzision und die Zuverlässigkeit eines Parkhilfesystems im Vergleich zu bekannten Systemen erhöht werden.

Es kann jedoch vorkommen, dass die Ausdehnung des benachbarten Fahrzeugs anhand ausschließlich der Sensorinformationen des Abstandssensors nicht ermittelt werden kann. So kann beispielsweise eine Situation auftreten, in welcher zwei relativ dicht nebeneinander geparkte Fahrzeuge anhand der Sensorinformationen fälschlicherweise als ein längsgeparktes Fahrzeug interpretiert werden. Aus diesem Grund ist in einer Ausführungsform vorgesehen, dass gleichzeitig das aufgenommene Bild sowohl einer Mustererkennung hinsichtlich des amtlichen Kennzeichens des benachbarten Fahrzeugs einerseits als auch hinsichtlich der Räder des benachbarten Fahrzeugs andererseits unterzogen wird. Dann kann die Orientierung des benachbarten Fahrzeugs anhand des Abbilds quasi unabhängig von den Sensorinformationen des Abstandssensors bestimmt werden. Dies ist besonders vorteilhaft, da dann die anhand von Sensordaten des Abstandssensors ermittelte Orientierung bzw. Ausdehnung des benachbarten Fahrzeugs mit der anhand des Abbilds ermittelten Orientierung verglichen und so plausibilisiert werden kann. Stimmen die beiden Orientierungen nicht überein, so können die Sensordaten noch einmal überprüft werden; es kann zum Beispiel eine andere Filterung der Sensordaten angewandt werden.

Ein erfindungsgemäßes Fahrerassistenzsystem für ein Kraftfahrzeug umfasst eine Kamera zum Aufnehmen eines Bildes eines benachbarten Fahrzeugs, wie auch eine Recheneinrichtung zum Verarbeiten des Bildes und hierbei zum Identifizieren zumindest eines Objekts an dem benachbarten Fahrzeug im Bild. Die Recheneinrichtung kann anhand eines Abbilds des identifizierten Objekts eine Orientierung des benachbarten Fahrzeugs bezüglich des Kraftfahrzeugs bestimmen.

Ein erfindungsgemäßes Kraftfahrzeug beinhaltet ein erfindungsgemäßes Fahrerassistenzsystem. Dabei gelten die mit Bezug auf das erfindungsgemäße Verfahren vorgestellten bevorzugten Ausführungsformen und deren Vorteile entsprechend für das erfindungsgemäße Fahrerassistenzsystem und das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand einzelner bevorzugter Ausführungsbeispiele, wie auch unter Bezugnahme auf die beigefügten Zeichnungen näher erläutert.

Es zeigen:
- Fig. 1: ein Bild eines Kennzeichenschildes eines benachbarten Fahrzeugs, wobei ein Verfahren gemäß einer Ausführungsform der Erfindung näher erläutert wird; und
- Fig. 2: ein Bild eines benachbarten Fahrzeugs, wobei ein Verfahren gemäß einer weiteren Ausführungsform der Erfindung näher erläutert wird.

Eine in einem Kraftfahrzeug verbaute Frontkamera, welche beispielsweise für den Spurassistenten verwendet wird, wird im Ausführungsbeispiel auch für die Bestimmung einer Orientierung von benachbarten Fahrzeugen bezüglich des eigenen Kraftfahrzeugs und gegebenenfalls auch für die Plausibilisierung der Orientierung eingesetzt. Zusätzlich oder alternativ kann dafür auch eine Rückfahrkamera verwendet werden.

Generell sucht sich die Kamera - beispielsweise eine CCD-Kamera (charge coupled device) oder CMOS-Kamera (complementary metal oxide semiconductor) - ein vorgegebenes, insbesondere auch normiertes, Objekt, wie beispielsweise ein amtliches Kennzeichen und/oder die Räder des benachbarten Fahrzeugs. Die Abmessungen des vorgegebenen Objekts sind prinzipiell bekannt. Einerseits kann aus den bekannten Abmessungen des vorgegebenen Objekts und dem Bild der Kamera der reale Abstand zu dem benachbarten Fahrzeug berechnet werden. Dazu ist es auch möglich, anhand eines Abbilds des identifizierten Objekts des benachbarten Fahrzeugs eine reale Orientierung dieses Fahrzeugs bezüglich des eigenen Kraftfahrzeugs zu bestimmen. Dazu verarbeitet eine Recheneinrichtung das aufgenommene Bild, sucht sich ein bestimmtes Objekt am benachbarten Fahrzeug im Bild und bestimmt die reale Orientierung anhand des Abbilds des identifizierten Objekts. Dazu werden zwei verschiedene Verfahren vorgeschlagen, die nachfolgend näher beschrieben werden.

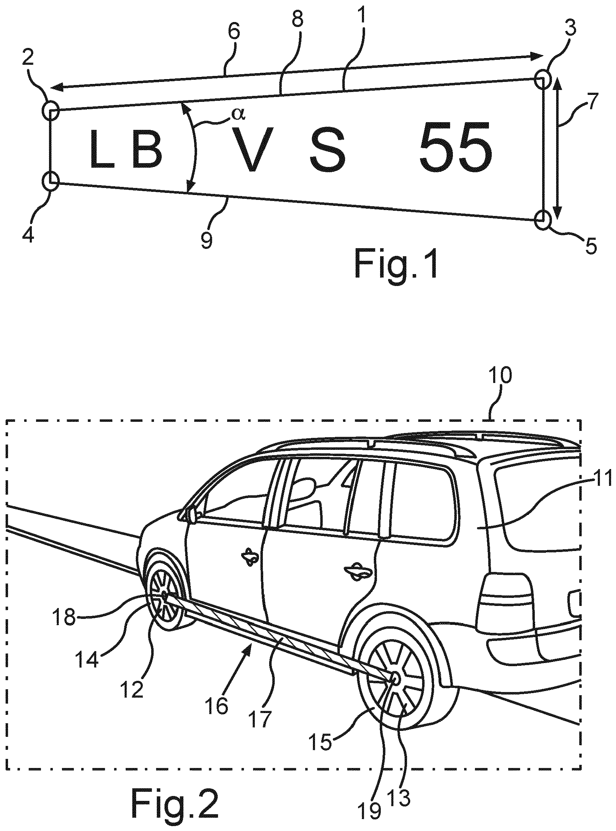

Bezugnehmen auf Fig. 1 wird ein Bild eines benachbarten Fahrzeugs durch die Kamera aufgenommen. Die Recheneinrichtung verarbeitet das aufgenommene Bild und identifiziert ein Kennzeichenschild 1 des benachbarten Fahrzeugs im Bild. Dazu wird das aufgenommene Bild einer Mustererkennung hinsichtlich Ecken 2, 3, 4, 5 unterzogen, also prinzipiell hinsichtlich eines Rechteckes bzw. eines Trapezes. Die Ecken 2 bis 4 werden dadurch identifiziert, dass zunächst die Kanten des Kennzeichens 1 erkannt werden. Nach Auffindend der Ecken 2 bis 5 anhand der Kanten überprüft die Recheneinrichtung, ob ein Verhältnis einer ersten Ausdehnung 6 des gefundenen Rechteckes bzw. Trapezes zu einer zweiten Ausdehnung 7 in einem vorgegebenen Wertebereich liegt. Somit kann die Identität des Kennzeichens 1 plausibilisiert werden bzw. die Recheneinrichtung kann überprüfen, ob es sich bei dem Rechteck bzw. Trapez um ein genormtes Kennzeichen handelt oder nicht. Somit kann das Kennzeichen 1 von anderen Rechtecken bzw. Trapezen unterschieden werden.

Anschließend berechnet die Recheneinrichtung einen Winkel • zwischen einer ersten Längskante 8 und einer zweiten Längskante 9 des Kennzeichens 1. Da die Normgröße des Kennzeichens 1 sowie die Ausrichtung des Kennzeichens 1 am benachbarten Fahrzeug bekannt sind, stellt der Winkel • ein Maß für die Orientierung des benachbarten Fahrzeugs relativ zum eigenen Kraftfahrzeug dar. Die Recheneinrichtung berechnet somit anhand des Winkels • einen Orientierungswinkel des benachbarten Fahrzeugs bezüglich des eigenen Kraftfahrzeugs.

Bezugnehmend auf Fig. 2 wird eine weitere Methode zur Bestimmung der Orientierung eines benachbarten Fahrzeugs näher erläutert. In Fig. 2 ist ein aufgenommenes Bild 10 eines benachbarten Fahrzeugs 11 dargestellt. Die Recheneinrichtung identifiziert zwei Räder 12, 13 derselben Fahrzeugseite des Fahrzeugs 11. Dazu unterzieht die Recheneinrichtung das aufgenommene Bild 10 einer Mustererkennung hinsichtlich Reifen 14, 15 der Räder 12, 13. Und zwar erfolgt die Erkennung der Reifen 14, 15 durch einen Mustervergleich, indem nach Mustern - nämlich einem schwarzen, nicht ausgefüllten Kreis - gesucht wird.

Nach Auffinden der Räder 12, 13 überprüft die Recheneinrichtung, ob es sich bei den Rädern 12, 13 um die Räder ein und desselben Fahrzeugs 11 handelt. Dazu untersucht die Recheneinrichtung einen Zwischenbereich 16 zwischen den Rädern 12, 13 auf seine Farbverteilung, nämlich in Längsrichtung zwischen den Rädern 12, 13. Wird eine gleichmäßige Farbverteilung erkannt, so können die Räder 12, 13 als zu ein und demselben Fahrzeug 11 gehörend interpretiert werden. Eine weitere Plausibilisierung kann darin bestehen, dass nach Linien gesucht wird, die eine Verbindungsgerade 17 zwischen den Rädern 12, 13 schneiden. Werden lediglich wenige Linien oder aber keine Linien erkannt, so ist dies ein zusätzliches Indiz dafür, dass es sich um die Räder 12, 13 ein und desselben Fahrzeugs 11 handelt.

Die Recheneinrichtung bestimmt jeweilige Mittelpunkte 18, 19 der Räder 12, 13 (also Mittelpunkte der Felgen) und definiert die Verbindungsgerade 17, welche die Mittelpunkte 18, 19 miteinander verbindet. Die Recheneinrichtung bestimmt dann die Orientierung des benachbarten Fahrzeugs 11 anhand der Ausrichtung der Verbindungsgeraden 17 im Bild 10. Bei der Bestimmung der Orientierung des Fahrzeugs 11 werden darüber hinaus vorzugsweise auch weitere Informationen berücksichtigt, nämlich die Position der Kamera am eigenen Kraftfahrzeug, der Zeitpunkt der Bildaufnahme, die Ausrichtung der Kamera am Fahrzeug und dergleichen.

Die Information über die Orientierung des benachbarten Fahrzeugs 11 bezüglich des Kraftfahrzeugs kann beispielsweise bei einem Parkhilfesystem sinnvoll genutzt werden. Dies kann beispielsweise so aussehen, dass unter Berücksichtigung der Orientierung des benachbarten Fahrzeugs auch die Ausrichtung einer nebenstehenden Parklücke bestimmt wird bzw. aufgeklärt wird, ob das eigene Kraftfahrzeug in eine Querparklücke oder aber eine Längsparklücke eingeparkt werden kann. Also kann die Information über die Ausrichtung des benachbarten Fahrzeugs 11 bei der Ermittlung einer Einparkbahn berücksichtigt werden, entlang welcher dann das eigene Kraftfahrzeug durch das Parkhilfesystem eingeparkt wird.

Ein solches Parkhilfesystem beinhaltet in der Regel auch einen Abstandssensor - etwa einen Ultraschallsensor -, der an einer Seitenflanke des Kraftfahrzeugs angebracht ist und mittels welchem Parklücken während einer Vorbeifahrt des Kraftfahrzeugs erfasst und vermessen werden können. In der Regel kann bereits anhand der Sensordaten des Abstandssensors die Ausrichtung einer Parklücke ermittelt werden; der Abstandssensor misst nämlich die jeweiligen Ausdehnungen der die Parklücke begrenzenden Fahrzeuge, nämlich während einer Vorbeifahrt des eigenen Kraftfahrzeugs an den anderen Fahrzeugen. Die anhand der Sensordaten ermittelte Orientierung kann dann plausibilisiert werden, indem die Orientierung der die Parklücke begrenzenden Fahrzeuge auch anhand der aufgenommenen Bilder - wie oben bereits beschrieben - ermittelt wird. Die beiden oben beschriebenen Verfahren können beispielsweise derart angewendet werden: Wird anhand der Sensordaten des Abstandssensors eine relativ geringe Ausdehnung des nebenstehenden Fahrzeugs gemessen bzw. festgestellt, dass das nebenstehende Fahrzeug quergeparkt ist, so können die aufgenommenen Bilder einer Mustererkennung hinsichtlich des Kennzeichens 1 unterzogen werden. Wird hingegen anhand der Sensordaten des Abstandssensors eine größere Ausdehnung des benachbarten Fahrzeugs 11 gemessen und somit festgestellt, dass dieses Fahrzeug 11 in einer Längsparklücke geparkt ist, so können die aufgenommenen Bilder einer Mustererkennung hinsichtlich der Räder 12, 13 unterzogen werden.

Die beiden oben beschriebenen Methoden können auch derart miteinander kombiniert werden, dass einerseits die Orientierung des benachbarten Fahrzeugs 11 anhand des Abbilds des Kennzeichens 1 und andererseits auch anhand des Abbilds der Räder 12, 13 bestimmt wird und anschließend ein Mittelwert aus diesen beiden Orientierungen berechnet wird. Dann wird die Orientierung des benachbarten Fahrzeugs besonders präzise bestimmt.

Es kann also vorgesehen sein, dass gleichzeitig - also parallel - das aufgenommene Bild 10 sowohl einer Mustererkennung hinsichtlich des amtlichen Kennzeichens 1 des benachbarten Fahrzeugs 11 einerseits als auch hinsichtlich der Räder 12, 13 des benachbarten Fahrzeugs 11 andererseits unterzogen wird. Anhand dieser Orientierung kann dann die mittels des Abstandssensors gewonnene Orientierung plausibilisiert werden.

## Patentansprüche

1. Verfahren zum Betreiben eines Fahrerassistenzsystems in einem Kraftfahrzeug zur Unterstützung beim Durchführen von Parkvorgängen durch
- Aufnehmen eines Bildes (10) eines benachbarten Fahrzeugs (11) durch eine Kamera des Fahrerassistenzsystems und
- Verarbeiten des Bildes (10) und hierbei Identifizieren zumindest eines Objektes (1, 12, 13) an dem benachbarten Fahrzeug (11) im Bild (10) mittels einer Recheneinrichtung des Fahrerassistenzsystems,
**gekennzeichnet durch**
- Bestimmen einer Orientierung des benachbarten Fahrzeugs (11), welches eine Purklücke begrenzt, bezüglich des Kraftfahrzeugs anhand eines Abbilds des identifizierten Objektes (1, 12, 13) wobei als Objekt (1, 12, 13) ein amtliches Kennzeichenschild (1) des benachbarten Fahrzeugs (11) im aufgenommenen Bild (10) identifiziert wird, und dass die Orientierung anhand des Abbilds des Kennzeichenschildes (1) bestimmt wird.

2. Verfahren nach Anspruch 1,
**dadurch gekennzeichnet, dass**
das Identifizieren des Kennzeichenschildes (1) beinhaltet, dass das aufgenommene Bild (10) einer Mustererkennung hinsichtlich Ecken (2 bis 5) und/oder Kanten des Kennzeichenschildes (1) unterzogen wird.

3. Verfahren nach Anspruch 2,
**dadurch gekennzeichnet, dass**
die Identität des Kennzeichenschildes (1) dadurch plausibilisiert wird, dass eine Länge (6) des Abbilds und eine Breite (7) des Abbilds ins Verhältnis gesetzt werden, und geprüft wird, ob das Verhältnis in einem vorgegebenen Wertebereich liegt.

4. Verfahren nach einem der Ansprüche 2 oder 3,
**dadurch gekennzeichnet, dass**
das Bestimmen der Orientierung anhand des Abbilds des Kennzeichenschildes (1) folgende Schritte umfasst:
- Identifizieren von Längskanten (8, 9) des Kennzeichenschildes (1) im Bild (10),
- Ermitteln eines Winkels (α) zwischen den Längskanten (8, 9) und
- Bestimmen der Orientierung abhängig von dem Winkel (α).

5. Verfahren nach einem der vorhergehenden Ansprüche,
**dadurch gekennzeichnet, dass**
als Objekte zwei Räder (12, 13) derselben Seite des benachbarten Fahrzeugs (11) im aufgenommenen Bild (10) identifiziert werden, und dass die Orientierung anhand des Abbilds der Räder (12, 13) bestimmt wird.

6. Verfahren nach Anspruch 5,
**dadurch gekennzeichnet, dass**
das Identifizieren eines Rades (12, 13) beinhaltet, dass das aufgenommene Bild (10) einer Mustererkennung hinsichtlich eines Reifens (14, 15) unterzogen wird.

7. Verfahren nach Anspruch 6,
**dadurch gekennzeichnet, dass**
das Bestimmen der Orientierung anhand des Abbilds der Räder (12, 13) folgende Schritte umfasst:
- Identifizieren eines jeweiligen Mittelpunktes (18, 19) der Räder (12, 13) im Bild (10),
- Definieren einer Verbindungsgeraden (17) zwischen den Mittelpunkten (18, 19) und
- Bestimmen der realen Orientierung abhängig von einer Ausrichtung der Verbindungsgeraden (17) im Bild (10).

8. Verfahren nach einem der vorhergehenden Ansprüche,
**dadurch gekennzeichnet, dass**
mithilfe eines von der Kamera verschiedenen Abstandssensors fahrzeugexterne Hindernisse, insbesondere Begrenzungen einer Parklücke, erfasst werden und erst nach Detektion eines Hindernisses die Verarbeitung des aufgenommenen Bildes (10) hinsichtlich der Identifikation des zumindest einen Objektes (1, 12, 13) im Bild (10) eingeleitet wird.

9. Verfahren nach einem der vorhergehenden Ansprüche,
**gekennzeichnet durch**
- Messen einer Ausdehnung des benachbarten Fahrzeugs (11) mithilfe eines von der Kamera verschiedenen Abstandssensors, insbesondere während einer Vorbeifahrt des Kraftfahrzeugs an dem benachbarten Fahrzeug (11),
- falls die Ausdehnung kleiner als ein vorgegebener Referenzwert ist, Unterziehen des Bildes (10) einer Mustererkennung hinsichtlich des amtlichen Kennzeichens (1) des benachbarten Fahrzeugs (11), und/oder
- falls die Ausdehnung größer als der vorgegebene Referenzwert ist, Unterziehen des Bildes (10) einer Mustererkennung hinsichtlich der Räder (12, 13) des benachbarten Fahrzeugs (11).

10. Verfahren nach einem der Ansprüche 1 bis 9,
**dadurch gekennzeichnet, dass**
gleichzeitig das Bild (10) einer Mustererkennung hinsichtlich des amtlichen Kennzeichens (1) des benachbarten Fahrzeugs (11) einerseits und hinsichtlich der Räder (12, 13) des benachbarten Fahrzeugs (11) andererseits unterzogen wird.

11. Verfahren nach einem der vorhergehenden Ansprüche,
**dadurch gekennzeichnet, dass**
eine anhand von Sensordaten eines von der Kamera verschiedenen Abstandssensors ermittelte Orientierung des benachbarten Fahrzeugs (11) mit der anhand des Abbilds des identifizierten Objektes (1, 12, 13) ermittelten Orientierung verglichen wird.

12. Fahrerassistenzsystem für ein Kraftfahrzeug zur Unterstützung beim Durchführen von Parkvorgängen, mit:
- einer Kamera zum Aufnehmen eines Bildes (10) eines benachbarten Fahrzeugs (11) und
- einer Recheneinrichtung zum Verarbeiten des Bildes (10) und hierbei zum Identifizieren zumindest eines Objektes (1, 12, 13) an dem benachbarten Fahrzeug (11) im Bild (10),
**dadurch gekennzeichnet, dass**
die Recheneinrichtung dazu ausgelegt ist, als Objekt (1,12,13) ein amtliches Kennzeichenschild (1) des benachbarten Fahrzeugs (11) im aufgenommenen Bild (10) zu identifizieren, und dass die Orientierung anhand des Abbilds des Kennzeichenschildes (1) zu bestimmen.

13. Kraftfahrzeug mit einem Fahrerassistenzsystem nach Anspruch 12.

## Claims

1. Method for operating a driver assistance system in a motor vehicle for providing assistance when carrying out parking manoeuvres by
- capturing an image (10) of an adjacent vehicle (11) by means of a camera of the driver assistance system and
- processing the image (10) and identifying in the process at least one object (1, 12, 13) on the adjacent vehicle (11) in the image (10) by means of a computing device of the driver assistance system,
**characterized by**
- determining an orientation of the adjacent vehicle (11), which bounds a parking space, with respect to the motor vehicle on the basis of a representation of the identified object (1, 12, 13), wherein an official number plate (1) of the adjacent vehicle (11) is identified in the captured image (10) as object (1, 12, 13), and in that the orientation is determined on the basis of the representation of the number plate (1).

2. Method according to Claim 1,
**characterized in that**
the identification of the number plate (1) includes subjecting the captured image (10) to a pattern recognition process with respect to corners (2 to 5) and/or edges of the number plate (1).

3. Method according to Claim 2,
**characterized in that**
the plausibility of the identity of the number plate (1) is checked **in that** a ratio is formed between a length (6) of the representation and a width (7) of the representation, and it is checked whether the ratio lies within a predefined value range.

4. Method according to one of Claims 2 to 3,
**characterized in that**
the determination of the orientation on the basis of the representation of the number plate (1) comprises the following steps:
- identifiying longitudinal edges (8, 9) of the number plate (1) in the image (10),
- acquiring an angle (α) between the longitudinal edges (8, 9), and
- determining the orientation as a function of the angle (α).

5. Method according to one of the preceding claims,
**characterized in that**
two wheels (12, 13) of the same side of the adjacent vehicle (11) are identified as objects in the captured image (10), and **in that** the orientation is determined on the basis of the representation of the wheels (12, 13).

6. Method according to Claim 5,
**characterized in that**
the identification of a wheel (12, 13) includes the captured image (10) being subjected to a pattern recognition process with respect to a tyre (14, 15).

7. Method according to Claim 6,
**characterized in that**
the determination of the orientation on the basis of the representation of the wheels (12, 13) comprises the following steps:
- identifying a respective centre point (18, 19) of the wheels (12, 13) in the image (10),
- defining a connecting straight line (17) between the centre points (18, 19),
and
- determining the real orientation as a function of an orientation of the connecting straight lines (17) in the image (10).

8. Method according to one of the preceding claims,
**characterized in that**
vehicle-external obstacles, in particular boundaries of a parking space, are detected by means of a distance sensor which is different from the camera, and the processing of the captured image (10) with respect to the identification of the at least one object (1, 12, 13) in the image (10) is not initiated until after the detection of an obstacle.

9. Method according to one of the preceding claims,
**characterized by**
- measuring an extent of the adjacent vehicle (11) using a distance sensor which is different from the camera, in particular while the motor vehicle is driving past the adjacent vehicle (11),
- if the extent is smaller than a predefined reference value, subjecting the image (10) to a pattern recognition process with respect to the official registration number (1) of the adjacent vehicle (11), and/or
- if the extent is greater than the predefined reference value, subjecting the image (10) to a pattern recognition process with respect to the wheels (12, 13) of the adjacent image (10).

10. Method according to one of Claims 1 to 9,
**characterized in that**
at the same time the image (10) is subjected to a pattern recognition process with respect to the official registration number (1) of the adjacent vehicle (1), on the one hand, and with respect to the wheels (12, 13) of the adjacent vehicle (11), on the other.

11. Method according to one of the preceding claims,
**characterized in that**
an orientation of the adjacent vehicle (11), acquired on the basis of sensor data of a distance sensor which is different from the camera, is compared with the orientation which is acquired on the basis of the representation of the identified object (1, 12, 13).

12. Driver assistance system for a motor vehicle for providing assistance when carrying out parking manoeuvres, having:
- a camera for capturing an image (10) of an adjacent vehicle (11), and
- a computing device for processing the image (10) and at the same time identifying at least one object (1, 12, 13) on the adjacent vehicle (11) in the image (10),
**characterized in that**
the computing device is configured to identify as an object (1, 12, 13) an official number plate (1) of the adjacent vehicle (11) in the recorded image (10), and **in that** the orientation to determine on the basis of the representation of the number plate (1).

13. Motor vehicle having a driver assistance system according to Claim 12.

## Revendications

1. Procédé pour faire fonctionner un système d'assistance au conducteur dans un véhicule automobile en vue de l'assistance lors de l'exécution de manoeuvres de stationnement par
- capture d'une image (10) d'un véhicule voisin (11) avec une caméra du système d'assistance au conducteur et
- traitement de l'image (10) et ainsi identification d'au moins un objet (1, 12, 13) sur le véhicule voisin (11) dans l'image (10) au moyen d'un dispositif de calcul du système d'assistance au conducteur, **caractérisé par**
- détermination d'une orientation du véhicule voisin (11), lequel délimite un emplacement de stationnement, par rapport au véhicule automobile à l'aide d'une représentation de l'objet (1, 12, 13) identifié, l'objet (1, 12, 13) identifié étant une plaque d'immatriculation (1) officielle du véhicule voisin (11) dans l'image (10) capturée, et en ce que l'orientation est déterminée à l'aide de la représentation de la plaque d'immatriculation (1).

2. Procédé selon la revendication 1, **caractérisé en ce que** l'identification de la plaque d'immatriculation (1) inclut le fait que l'image (10) capturée est soumise à une reconnaissance de modèle concernant les coins (2 à 5) et/ou les bords de la plaque d'immatriculation (1).

3. Procédé selon la revendication 2, **caractérisé en ce que** la plausibilité de l'identité de la plaque d'immatriculation (1) est vérifiée **en ce qu'**une longueur (6) de la représentation et une largeur (7) de la représentation sont mises en rapport, et un contrôle est effectué afin de vérifier si le rapport se trouve dans une plage de valeurs prédéfinie.

4. Procédé selon l'une des revendications 2 ou 3, **caractérisé en ce que** la détermination de l'orientation au moyen de la représentation de la plaque d'immatriculation (1) comprend les étapes suivantes :
- identification de bords longs (8, 9) de la plaque d'immatriculation (1) dans l'image (10),
- détermination d'un angle (α) entre les bords longs (8, 9) et
- détermination de l'orientation en fonction de l'angle (α).

5. Procédé selon l'une des revendications précédentes, **caractérisé en ce que** les objets identifiés sont deux roues (12, 13) du même côté du véhicule voisin (11) dans l'image (10) capturée, et **en ce que** l'orientation est déterminée à l'aide de la représentation des roues (12, 13).

6. Procédé selon la revendication 5, **caractérisé en ce que** l'identification d'une roue (12, 13) inclut le fait que l'image (10) capturée est soumise à une reconnaissance de modèle concernant un pneu (14, 15).

7. Procédé selon la revendication 6, **caractérisé en ce que** la détermination de l'orientation à l'aide de la représentation des roues (12, 13) comprend les étapes suivantes :
- identification d'un point central (18, 19) respectif des roues (12, 13) dans l'image (10),
- définition d'une droite de liaison (17) entre les points centraux (18, 19) et
- détermination d'une orientation réelle en fonction d'un alignement de la droite de liaison (17) dans l'image (10).

8. Procédé selon l'une des revendications précédentes, **caractérisé en ce que** des obstacles externes au véhicule, notamment les délimitations d'un emplacement de stationnement, sont détectés à l'aide d'un capteur d'espacement différent de la caméra, et le traitement de l'image (10) capturée concernant l'identification de l'au moins un objet (1, 12, 13) dans l'image (10) n'est initié qu'après la détection d'un obstacle.

9. Procédé selon l'une des revendications précédentes, **caractérisé par**
- mesure d'une étendue du véhicule voisin (11) à l'aide d'un capteur d'espacement différent de la caméra, notamment pendant un passage du véhicule automobile à côté du véhicule voisin (11),
- dans le cas où l'étendue est inférieure à une valeur de référence prédéfinie, soumission de l'image (10) à une reconnaissance de modèle concernant l'immatriculation officielle (1) du véhicule voisin (11), et/ou
- dans le cas où l'étendue est supérieure à une valeur de référence prédéfinie, soumission de l'image (10) à une reconnaissance de modèle concernant les roues (12, 13) du véhicule voisin (11).

10. Procédé selon l'une des revendications 1 à 9, **caractérisé en ce que** l'image (10) est soumise simultanément à une reconnaissance de modèle concernant l'immatriculation officielle (1) du véhicule voisin (11) d'une part et concernant les roues (12, 13) du véhicule voisin (11) d'autre part.

11. Procédé selon l'une des revendications précédentes, **caractérisé en ce qu'**une orientation du véhicule voisin (11), déterminée à l'aide de données de capteur d'un capteur d'espacement différent de la caméra, est comparée avec l'orientation déterminée à l'aide de la représentation de l'objet (1, 12, 13) identifié.

12. Système d'assistance au conducteur dans un véhicule automobile en vue de l'assistance lors de l'exécution de manoeuvres de stationnement, comprenant
- une caméra destinée à capturer une image (10) d'un véhicule voisin (11) et
- un dispositif de calcul destiné à traiter l'image (10) et ainsi à identifier au moins un objet (1, 12, 13) sur le véhicule voisin (11) dans l'image (10), **caractérisé en ce que**
le dispositif de calcul est conçu pour identifier en tant qu'objet (1, 12, 13) une plaque d'immatriculation (1) officielle du véhicule voisin (11) dans l'image (10) capturée, et **en ce que** l'orientation à déterminer à l'aide de la représentation de la plaque d'immatriculation (1).

13. Véhicule automobile équipé d'un système d'assistance au conducteur selon la revendication 12.
